Europäisches Patentamt

European Patent Office

Office européen des brevets

(11) Veröffentlichungsnummer: **0 154 289**
**B1**

# (12) EUROPÄISCHE PATENTSCHRIFT

(45) Veröffentlichungstag der Patentschrift:
**28.12.88**

(21) Anmeldenummer: **85102143.6**

(22) Anmeldetag: **27.02.85**

(51) Int. Cl.⁴: **A 01 G 9/10,** A 01 G 7/00

(54) Vorrichtung zum Züchten von Pflanzen mit abnormalem Wachstum in einem Behälter.

(30) Priorität: **08.03.84 DE 3408479**

(43) Veröffentlichungstag der Anmeldung:
**11.09.85 Patentblatt 85/37**

(45) Bekanntmachung des Hinweises auf die Patenterteilung:
**28.12.88 Patentblatt 88/52**

(84) Benannte Vertragsstaaten:
**AT BE CH FR GB IT LI NL SE**

(56) Entgegenhaltungen:
**DE-A- 3 047 818**
**DE-C- 2 602 107**
**DE-C- 2 744 143**

(73) Patentinhaber: **Firma Hermann Königer,**
**Fackelbrückenstrasse 5, D-7080 Aalen (DE)**

(72) Erfinder: **Königer, Martin, Dr. Dipl.-Ing.,**
**Spitzwegstrasse 2, D-7080 Aalen (DE)**

(74) Vertreter: **Lorenz, Werner, Dipl.-Ing., Fasanenstrasse 7,**
**D-7920 Heidenheim (DE)**

**Beschreibung**

Die Erfindung betrifft eine Vorrichtung zum Züchten von Pflanzen mit abnormalem Wachstum in einem Behälter mit vollständig oder teilweise durchlöcherten Wänden und einer Öffnung in Wachstumsrichtung der Pflanze, wobei der Behälter die Form eines Beutels mit wenigstens einem Versteifungsbügel aufweist.

Eine Vorrichtung dieser Art ist in der DE-A-30 47 818 beschrieben.

Diese Vorrichtung bzw. dieser Behälter dient dazu, Pflanzen mit einem Miniwachstum zu züchten, wie es z.B. in der DE-PS 26 02 107 beschrieben ist. In der DE-C-27 44 143 ist ein Verfahren zum Züchten von Pflanzen mit normalem Wachstum über der Erde, jedoch einem verringerten Wurzelvolumen und ein Behälter zur Durchführung dieses Verfahrens beschrieben.

Bei diesen bekannten Druckschriften bestehen die verwendeten Behälter im wesentlichen aus Beuteln, deren Wände nahezu vollständig durchlöchert sind. Die in der DE-C-26 02 107 und in der DE-C-27 44 143 beschriebenen Behälter unterscheiden sich im wesentlichen lediglich in ihrer Grösse. Zum Züchten von Pflanzen von normalem Wachstum über der Erde und abnormalem Wachstum unterhalb der Erdoberfläche werden diese Behälter im allgemeinen grösser als 51 cm³ sein und in einem Bereich von 51 cm³ bis ca. 100 Liter liegen. Gelegentlich können sie auch grössere Volumen besitzen. Bei der DE-C-26 02 107 werden hingegen Behälter verwendet, deren Volumen im allgemeinen kleiner als 51 cm³ sind. Auf diese Weise erhält man nicht nur ein abnormales Wachstum unterhalb der Erdoberfläche, sondern auch eine sehr erhebliche Beschränkung des Grössenwachstums von Pflanzen über der Erde.

Nachteilig bei den bekannten Behältern ist jedoch, dass sie in der Handhabung noch etwas umständlich und nicht genügend stabil sind. In der DE-A-30 47 818 ist zwar bereits ein Behälter vorgeschlagen, der mit Versteifungen in Form eines Bügels versehen ist, aber da der Beutel im nichtbenutzten Zustand flach ist, muss er zu dessen Verwendung erst aufgebogen werden, damit Erde und Samen eingefüllt werden können. Nachteilig ist weiterhin, dass bei bestimmten Pflanzen die Gefahr besteht, dass die Wurzeln, welche in ihrer Ausbreitung und in ihrem Grössenwachstum auf das Innere des Behälters beschränkt bleiben sollen, nach oben herauswachsen.

Der vorliegenden Erfindung liegt daher die Aufgabe zugrunde, eine Vorrichtung der eingangs erwähnten Art zu schaffen, die einfach zu handhaben und sehr stabil ist und bei der soweit wie möglich ein Herauswachsen von Wurzeln aus der oberen Öffnung vermieden wird. Ausserdem soll diese Vorrichtung für eine Massenanwendung geeignet sein.

Erfindungsgemäss wird diese Aufgabe dadurch gelöst, dass der Behälter am oberen Ende einen Ringdeckel besitzt, der einen grösseren Aussendurchmesser aufweist als der Behälter zusammen mit dem Versteifungsbügel, dass in die Öffnung des Ringdeckels der Behälter eingepasst ist und dass Mittel vorgesehen sind, um den Ringdeckel und den Behälter zusammenzuhalten.

Durch die erfindungsgemässe Ausgestaltung wird zum einen eine relativ hohe Stabilität erreicht und zum anderen ist der beutelartige Behälter durch den Ringdeckel in einer für die Verwendung richtigen Form, im wesentlichen einer Kreisform, gehalten.

Dadurch, dass der Ringdeckel einen grösseren Aussendurchmesser besitzt als der Behälter zusammen mit dem Versteifungsbügel, werden die Wurzeln der Pflanzen an einem Herauswachsen gehindert. Dies gilt insbesondere bei Pflanzen mit einer sehr intensiven Wurzelbildung, welche unter Umständen sogar noch Luftwurzeln bilden. Durch die Verlängerung des Ringdeckels nach aussen wird sicher erreicht, dass keine Erdverbindung im Bereich der oberen Öffnung vorhanden ist. Dadurch erhalten die Wurzeln keine Feuchtigkeit und können nicht aus der Öffnung herauskriechen.

Zur besseren Führung kann vorgesehen sein, dass der Ringdeckel mit einem Aufsatzring versehen ist, dessen Innendurchmesser wenigstens annähernd dem Innendurchmesser der Öffnung des Ringdeckels entspricht.

Durch diese Massnahme ergibt sich eine bessere Anlagefläche für den oberen Rand des Behälters.

Zum leichteren Einbringen der Vorrichtung in das Erdreich ist es von Vorteil, wenn der Behälter im unteren Bereich eine nach unten gerichtete Spitze aufweist. Die Spitze kann beliebige Formen besitzen. Vorzugsweise wird man eine Dreiecksform verwenden, mit einer nach unten ragenden Dreiecksspitze.

Zur Herstellungsvereinfachung können der Ringdeckel und der Aufsatzring einstückig sein.

Nachfolgend ist ein Ausführungsbeispiel der Erfindung anhand der Zeichnung prinzipmässig näher beschrieben.

Es zeigen:

Fig. 1 eine Seitenansicht des Führungsteiles;

Fig. 2 eine Seitenansicht des beutelartigen Behälters;

Fig. 3 eine Seitenansicht des Klemmringes;

Fig. 4 eine Seitenansicht des Führungsteiles in einer Ansicht aus Pfeilrichtung A der Fig. 1;

Fig. 5 eine Seitenansicht des beutelartigen Behälters aus der gleichen Ansichtsrichtung;

Fig. 6 eine Seitenansicht des Klemmringes aus der gleichen Seitenansichtsrichtung;

Fig. 7 eine Draufsicht auf das Führungsteil aus Pfeilrichtung B der Fig. 1;

Fig. 8 eine Draufsicht auf den Klemmring, ebenfalls aus der gleichen Ansichtsrichtung;

Fig. 9 eine Seitenansicht der erfindungsgemässen Vorrichtung im zusammengebauten Zustand entsprechend den Ansichten nach den Fig. 1 bis 3;

Fig. 10 eine Draufsicht auf die Vorrichtung nach der Fig. 9 aus Pfeilrichtung C;

Fig. 11 einen Schnitt nach der Linie XI–XI der Fig. 9 in Ausschnittsvergrösserung.

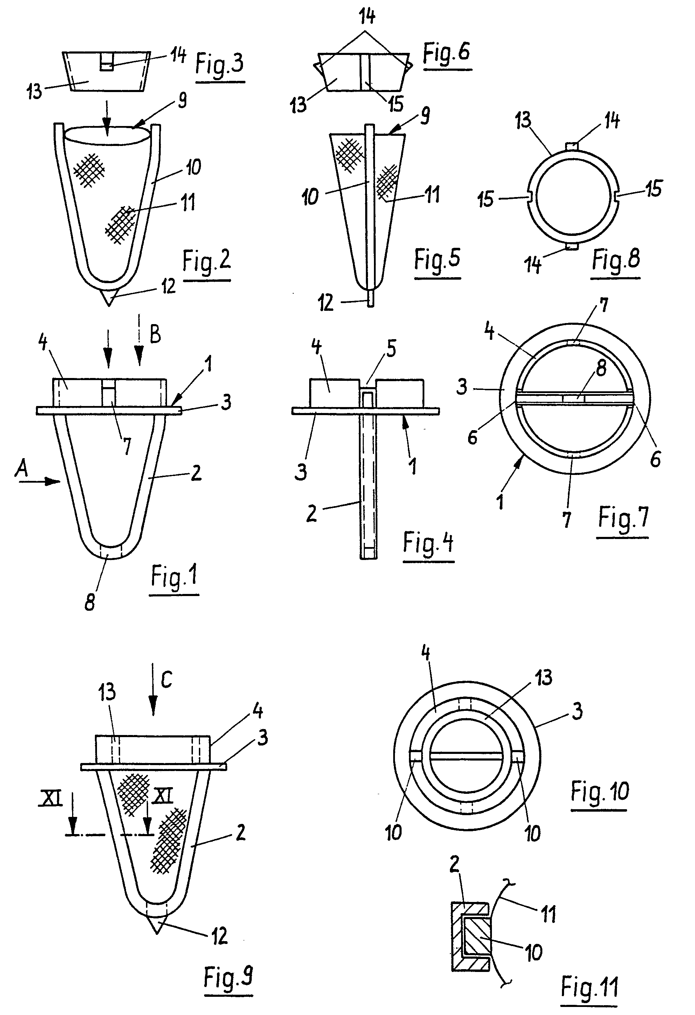

In der Fig. 1 ist das Führungsteil 1 mit einem bügelförmigen Führungsrahmen 2 dargestellt, der im Querschnitt gesehen eine U-Profilform besitzt (siehe Fig. 11). Der Führungsrahmen 2 ist mit seinen beiden Schenkeln am oberen Ende an einem Ringdeckel 3 befestigt. Von dem Ringdeckel 3 aus ragt ein Aufsatzring 4 nach oben. Führungsrahmen 2, Ringdeckel 3 und Aufsatzring 4 können einstückig, z.B. aus Kunststoff sein, jedoch im Bedarfsfalle auch getrennte Teile sein.

Der Aufsatzring 4 ist auf gegenüberliegenden Seiten im Bereich des Führungsrahmens 2 mit Schlitzen 5 versehen. Ebenso besitzt der Ringdeckel 3 in diesem Bereich Aussparungen 6. Jeweils 90 Grad versetzt zu den Schlitzen 5 in dem Aufsatzring 4 befinden sich Öffnungen 7.

Ein weiterer Schlitz 8 befindet sich am unteren Ende des Führungsrahmens 2.

In den Fig. 2 und 5 ist der beutelartige Behälter 9 dargestellt. Er besteht im wesentlichen aus einem U-förmig gebogenen Versteifungsbügel 10, an dem ein den Beutel bildendes Sieb 11 befestigt, z.B. geklebt, ist. Das Sieb 11 wird im allgemeinen Lochdurchmesser von 0,05 bis 1 mm besitzen. Die Enden des Versteifungsbügels 10 ragen ein geringes Mass über der Beutel 11 hervor, damit sie leichter in das Führungsteil 1 einzusetzen bzw. herauszunehmen sind. Der Versteifungsbügel 10 besitzt am unteren Ende eine dreieckförmige Spitze 12, die beim Zusammenfügen durch den Schlitz 8 in dem Führungsrahmen 2 gesteckt werden kann.

In den Fig. 3, 6 und 8 ist ein Klemmring 13 dargestellt. Der Klemmring 13 besitzt einen derartigen Aussendurchmesser, dass er nach einem Einführen des Behälters 9 in das Führungsteil 1 den oberen Rand des Beutels bzw. Siebes 11 an die Innenwand des Aufsatzringes 4 andrückt. Der Versteifungsbügel 10 ist dabei in den Führungsrahmen 2 eingeschoben und liegt im Bereich des Ringdeckels 3 in dessen Aussparungen 6 und in dem Aufsatzring 4 in dessen Schlitzen 5 und zwar jeweils bündig.

Damit der Klemmring 13 einen sicheren Sitz hat, ist er auf gegenüberliegenden Seiten am Aussenumfang mit zwei Nasen 14 versehen, die beim Einschieben in den Aufsatzring 4 des Führungsteiles 1 in die Öffnungen 7 des Aufsatzringes 4 einrasten. Zusätzlich kann der Klemmring 13 in dem Bereich, in welchem die Enden des Versteifungsbügels 10 in dem Aufsatzring 4 angeordnet sind, zur Zentrierung bzw. besseren Einpassung mit entsprechenden Abflachungen bzw. Aussparungen 15 von geringer Tiefe versehen sein.

Aus den Fig. 1 bis 3 ist ersichtlich, wie in Pfeilrichtung der Behälter 9 und der Klemmring 13 in das Führungsteil 1 engeschoben werden können.

Die Fig. 9 zeigt den zusammengebauten Zustand. Dabei ragt, wie ersichtlich, die dreieckförmige Spitze 12 des Versteifungsbügels 10 aus dem Führungsrahmen nach unten heraus.

Wie aus den Fig. weiterhin ersichtlich ist, überragt der Ringdeckel 3 den Behälter 9 samt Versteifungsbügel 10. Die Durchmesservergrösserung hängt vom jeweiligen Anwendungsfall und von der Grösse des Behälters ab. Der überragende Teil des Ringdeckels 3, welcher sich in horizontaler Richtung erstreckt, hat die Aufgabe evtl. aus dem Inneren des Behälters 9 herauskriechende Wurzeln an einem Erdkontakt zu hindern bzw. wird durch diesen überhaupt verhindert, dass Wurzeln herauswachsen können, weil diese mangels Erde und Feuchtigkeit sofort vertrocknen würden.

**Patentansprüche**

1. Vorrichtung zum Züchten von Pflanzen mit abnormalem Wachstum in einem Behälter mit vollständig oder teilweise durchlöcherten Wänden und einer Öffnung in Wachstumsrichtung der Pflanze, wobei der Behälter die Form eines Beutels mit wenigstens einem Versteifungsbügel aufweist, dadurch gekennzeichnet, dass der Behälter (9) am oberen Ende einen Ringdeckel (3) besitzt, der einen grösseren Aussendurchmesser aufweist als der Behälter (9) zusammen mit dem Versteifungsbügel (10), dass in die Öffnung des Ringdeckels der Behälter (9) eingepasst ist, und dass Mittel vorgesehen sind, um den Ringdeckel (3) und den Behälter (9) zusammenzuhalten.

2. Vorrichtung nach Anspruch 1, dadurch gekennzeichnet, dass der Ringdeckel (3) mit einem Aufsatzring (4) versehen ist, dessen Innendurchmesser wenigstens annähernd dem Innendurchmesser der Öffnung des Ringdeckels (3) entspricht.

3. Vorrichtung nach Anspruch 1 oder 2, dadurch gekennzeichnet, dass der Behälter (9) im unteren Bereich eine nach unten gerichtete Spitze (12) aufweist.

4. Vorrichtung nach Anspruch 3, dadurch gekennzeichnet, dass die Spitze (12) eine Dreiecksform besitzt mit einer nach unten ragenden Dreieckspitze.

5. Vorrichtung nach Anspruch 1 und 2, dadurch gekennzeichnet, dass der Ringdeckel (3) und der Aufsatzring (4) einstückig sind.

**Claims**

1. Apparatus for cultivating plants with abnormal growth in a container with completely or partly perforated walls and an aperture in the direction of growth of the plant, with the container having the shape of a bag having at least one stiffening strap, characterised in that at the upper end the container (9) has a circular lid (3) having a larger external diameter than the container (9) together with the siffening strap (10), in that the container (9) is fitted into the aperture of the circular lid, and in that means are provided to hold together the circular lid (3) and the container (9).

2. Apparatus according to Claim 1, characterised in that the circular lid (3) is provided with an adapter ring (4), the internal diameter of which corresponds at least approximately to the internal diameter of the aperture of the circular lid (3).

3. Apparatus according to Claim 1 or 2, characterised in that the container (9) has a downwardly directed point (12) in the lower region.

4. Apparatus according to Claim 3, characterised in that the point (12) has a triangular shape with a downwardly pointing triangular point.

5. Apparatus according to Claim 1 and 2, characterised in that the circular lid (3) and the adapter ring (4) are in one piece.

**Revendications**

1. Dispositif pour cultiver des plantes avec une croissance anormale dans un récipient comportant des parois entièrement ou partiellement perforées et une ouverture dans la direction de croissance, le récipient ayant la forme d'un sac pourvu d'au moins un étrier de raidissement, caractérisé en ce que le récipient (9) comporte à son extrémité supérieure un couvercle annulaire (3) qui présente un diamètre extérieur plus grand que celui du récipient (9) avec l'étrier de raidissement (10), en ce que le récipient (9) est emboîté dans l'ouverture du couvercle annulaire, et en ce que des moyens sont prévus pour fixer mutuellement le couvercle (3) et le récipient (9).

2. Dispositif selon la revendication 1, caractérisé en ce que le couvercle annulaire (3) est pourvu d'une surélévation annulaire (4) dont le diamètre intérieur correspond au moins approximativement au diamètre intérieur de l'ouverture du couvercle (3).

3. Dispositif selon la revendication 1 ou 2, caractérisé en ce que le récipient (9) comporte à sa zone inférieure une pointe (12) orientée vers le bas.

4. Dispositif selon la revendication 3, caractérisé en ce que ladite pointe (12) a la forme d'un triangle ayant un sommet orienté vers le bas.

5. Dispositif selon les revendications 1 et 2, caractérisé en ce que le couvercle annulaire (3) et la surélévation annulaire (4) sont d'une seule pièce.

Fig.3

Fig.6

Fig.2

Fig.5

Fig.8

Fig.1

Fig.4

Fig.7

Fig.9

Fig.10

Fig.11